# EUROPÄISCHE PATENTANMELDUNG

(11) **EP 1 319 344 A1**
(43) Veröffentlichungstag der Anmeldung: **18.06.2003**
(21) Anmeldenummer: 02025933.9
(22) Anmeldetag: 20.11.2002
(51) Int. Cl.: A23L 1/32, G01D 11/24, G01D 11/28, B60K 35/00, B60K 37/02

(54) **Anzeigevorrichtung mit mindestens einem in deren frontseitigem Gehäuseteil angeordneten Zeigerinstrument**

(30) Priorität: 11.12.2001 DE 10160749
(71) Anmelder: SIEMENS AKTIENGESELLSCHAFT, 80333 München (DE)
(72) Erfinder: Tuzar, Gert-Dieter, 78052 Obereschach (DE)

(57) **Zusammenfassung**

Es wird eine Anzeigevorrichtung mit mindestens einem in deren frontseitigem Gehäuseteil (20) angeordneten Zeigerinstrument mit einer frontseitigen Oberfläche (19) vorgeschlagen, wobei die frontseitige Oberfläche (19) des Zeigerinstruments durchbruchfrei und zusammen mit dem frontseitigen Gehäuseteil (20) der Anzeigevorrichtung einstückig ausgebildet ist. Die frontseitige Oberfläche (19) des Zeigerinstruments kann zusammen mit dem frontseitigen Gehäuseteil (20) der Anzeigevorrichtung einstückig aus Kunststoff in einem 2-Komponenten-Spritzgießverfahren hergestellt sein.

## Beschreibung

Die Erfindung betrifft eine Anzeigevorrichtung mit mindestens einem in deren frontseitigem Gehäuseteil angeordneten Zeigerinstrument mit einer frontseitigen Oberfläche. Die bevorzugte Anwendung der Anzeigevorrichtung ist bei einem Kombiinstrument eines Fahrzeugs gegeben.

Ein Kombiinstrument ist eine im Armaturenbrett eines Fahrzeugs verbaute Baugruppe, die in ihrem frontseitigem Gehäuseteil neben Kontrolleuchten und anderen Anzeigen zur Warnung oder Information des Fahrers mindestens ein Zeigerinstrument besitzt. Handelsübliche Kombiinstrumente weisen dabei an ihrem frontseitigem Gehäuseteil für das Zeigerinstrument einen Zeiger auf, dessen Achse die frontseitige Oberfläche des Zeigerinstruments durchstößt und der zur Anzeige eines Meßwertes ein Skalenblatt überstreicht. Die frontseitige Oberfläche des Zeigerinstruments wird somit im wesentlichen aus dem das Zeigerinstrument abdeckende Skalenblatt gebildet. Zum Schutz vor Berührung, Schmutz sowie eindringender Feuchtigkeit werden derartige Kombiinstrumente frontseitig in einem gewissen Abstand zum Skalenblatt mit einem Deckglas aus Kunststoff oder Mineralglas abgedeckt. Diese Anordnung hat jedoch den Nachteil, daß ein Deckglas bei Lichteinfall unvermeidlich störende Reflexe und Spiegelungen verursacht. Besonders stark tritt dieser Effekt bei Fahrzeugen zutage, deren Kombiinstrument üblicherweise nicht beispielsweise durch eine Hutze gegen störenden Lichteinfall geschützt ist, so insbesondere bei Nutzfahrzeugen, Motorrädern, Baumaschinen sowie Fahrzeugen mit offenem Verdeck. So steht bei den meisten dieser genannten Fahrzeuge nicht der notwendige Bauraum zur Verfügung, um als Blendschutz für das Kombiinstrument im Armaturenbrett einen vor dem unerwünschten Lichteinfall schützenden Schacht zu realisieren.

Zur Minderung der störenden Reflexe und Spiegelungen wurden Anzeigeflächen in der Anzeigevorrichtung durch mechanisch-konstruktive Maßnahmen verschattet, indem das Zeigerinstrument zum Beispiel in einem in die Anzeigevorrichtung eingelassenen Tubus angeordnet oder von einer vorgezogenen Wulst bzw. Hutze gegen Lichteinfall geschirmt wird. Auch hat man das Deckglas oberhalb einer dunklen, reflexfreien Fläche gekrümmt angeordnet, um den optischen Strahlengang gegen diese Fläche zu richten. Alle diese Maßnahmen sind in der geschilderten bevorzugten Anwendung entweder aus Gründen des fehlenden Bauraums nicht oder nur sehr unvollkommen ergreifbar. Auch sind für die Oberflächengestaltung des Deckglases bereits Antireflexbeschichtungen oder die Anbringung bestimmter, bisweilen recht komplexer Strukturen vorgeschlagen worden, die jedoch durch den zu betreibenden Aufwand ein Deckglas unvertretbar teuer machen. Im übrigen geht mit einer Anbringung optischer Strukturen auf dem Deckglas bezüglich der Ablesequalität der hinter diesem Deckglas angeordneten Zeigerinstrumente und Anzeigen eine gewisse Unschärfe einher.

Es ist nun die Aufgabe der vorliegenden Erfindung, eine Anzeigevorrichtung mit mindestens einem in deren frontseitigem Gehäuseteil angeordneten Zeigerinstrument mit einer frontseitigen Oberfläche aufzuzeigen, wobei die Oberfläche des Zeigerinstruments zum Betrachter hin bei Lichteinfall reflexfrei ist und keine störenden Spiegelungen aufweist und damit auch für den Einsatz in der bevorzugten Anwendung geeignet ist.

Die Aufgabe wird durch eine Anzeigevorrichtung mit den Merkmalen des ersten Anspruchs gelöst. Eine derartige Anzeigevorrichtung mit mindestens einem in deren frontseitigem Gehäuseteil angeordneten Zeigerinstrument mit einer frontseitigen Oberfläche zeichnet sich dadurch aus, daß die frontseitige Oberfläche des Zeigerinstruments durchbruchfrei und zusammen mit dem frontseitigen Gehäuseteil der Anzeigevorrichtung einstückig ausgebildet ist. Die abhängigen Ansprüche zeigen weitere Ausgestaltungen und Weiterbildungen der gefundenen Lösung. So ist es von Vorteil, die frontseitige Oberfläche des Zeigerinstruments zusammen mit dem frontseitigen Gehäuseteil der Anzeigevorrichtung einstückig aus Kunststoff in einem 2-Komponenten-Spritzgießverfahren herzustellen. Auch die Skale und die Zeichen für deren Beschriftung können im 2-Komponenten-Spritzgießverfahren hergestellt werden. Eine Ausführung der Erfindung sieht vor, daß der frontseitige Gehäuseteil der Anzeigevorrichtung eine zumindest partiell transparente Abdeckung zum Erkennen eines dahinter angeordneten auslenkbaren diskreten Zeigers oder eines Anzeigefeldes aufweist, wobei auf dem Anzeigefeld durch eine elektronische Steuerschaltung die Zeigerfunktion grafisch nachgebildet ist. Eine weitere Ausführung der Erfindung sieht vor, daß der frontseitige Gehäuseteil der Anzeigevorrichtung vollständig aus einem lichtdurchlässigen Kunststoff gefertigt ist, wobei in diesen frontseitigen Gehäuseteil eine zumindest partiell transparente Abdeckung zum Erkennen eines dahinter angeordneten auslenkbaren diskreten Zeigers oder eines Anzeigefeldes formschlüssig eingearbeitet ist, wobei auf dem Anzeigefeld die Zeigerfunktion grafisch nachgebildet ist. Dabei kann der frontseitige, vollständig aus einem lichtdurchlässigen Kunststoff gefertigte Gehäuseteil der Anzeigevorrichtung mit einer opaken Lackschicht überzogen sein, wobei aus dieser Lackschicht die Bereiche für die Skale und die Zeichen für deren Beschriftung abgetragen sind, so daß diese von der Lackschicht freigelegten Bereiche und Zeichen durch im Innern der Anzeigevorrichtung angeordnete Leuchtmittel beleuchtbar sind. Bei beiden vorgenannten Ausgestaltungen der Erfindung können innenseitig am frontseitigen Gehäuseteil der Anzeigevorrichtung oder an der frontseitigen Oberfläche des Zeigerinstruments Stege angeformt sein, die den Lichtstrom von im Inneren der Anzeigevorrichtung angebrachten Leuchtmitteln kanalisieren, wobei in vielen Fällen die Skale und die Zeichen für deren Beschriftung verschiedenfarbig beleuchtet sind. Diese Leuchtmittel und der Antrieb für den Zeiger bzw. das Display können vorteilhafterweise auf derselben Leiterplatte montiert sein. Ebenso wird man die Anzeigevorrichtung rückseitig mit einem Gehäusedeckel oder durch die vorgenannte, entsprechend ausgeformte Leiterplatte abschließen.

Die gefundene Lösung hat den besonderen Vorteil, daß sie ohne Einbuße in der Funktionalität eine Anzeigevorrichtung ohne ein Deckglas realisiert. Durch den Wegfall des Deckglases wird nicht nur ein Bauteil eingespart, was bei einer gattungsgemäßen Anzeigevorrichtung zu einer deutlichen Kostenreduktion führt, sondern es entfällt damit auch gänzlich die Ursache für störende Spiegelungen und Reflexe. Schärfe und Kontrast der in der Anzeigevorrichtung angeordneten analogen und digitalen Anzeigen werden durch optische Maßnahmen nicht beeinträchtigt. Dadurch, daß die frontseitige Oberfläche des Zeigerinstruments durchbruchfrei und zusammen mit dem frontseitigen Gehäuseteil der Anzeigevorrichtung einstückig ausgebildet ist, können weder Staub, Schmutz oder Feuchtigkeit von der Vorderseite in die Anzeigevorrichtung eindringen. Ebenso ist ein Schutz vor dem Berühren beweglicher Teile nicht erforderlich, weil an der Frontseite der Anzeigevorrichtung kein sich drehender Zeiger angeordnet ist. Die vorgeschlagene Ausgestaltung einer Anzeigevorrichtung ist sehr robust gegen mechanische Schwingungen, was diese Ausgestaltung für den Einsatz in der bevorzugten Anwendung geeignet macht. Mit der vorgeschlagenen Anzeigevorrichtung ist ein Kombiinstrument als eine sehr kompakte, flache Baugruppe ausbildbar, weil diese Ausgestaltung keine große Bautiefe erfordert. So entfällt zum Beispiel der sonst für den Bewegungsraum des Zeigers notwendige Abstand zwischen der frontseitigen Oberfläche des Zeigerinstruments und dem Deckglas.

Anhand von 5 Figuren soll die gefundene Lösung nun noch näher erläutert werden. Dabei zeigen jeweils in Form von vereinfachten Prinzipskizzen
- Figur 1: ein Ausführungsbeispiel der Erfindung in Form einer Anzeigevorrichtung mit einem diskreten Zeigerinstrument in einem im 2-Komponenten-Spritzgießverfahren hergestellten Gehäuse,
- Figur 2: ein Ausführungsbeispiel der Erfindung in Form einer Anzeigevorrichtung mit einem auf einem Display nachgebildeten Zeigerinstrument in einem im 2-Komponenten-Spritzgießverfahren hergestellten Gehäuse,
- Figur 3: ein Ausführungsbeispiel der Erfindung in Form einer Anzeigevorrichtung mit einem diskreten Zeigerinstrument in einem abrativ bearbeiteten Gehäuse,
- Figur 4: ein Ausführungsbeispiel der Erfindung in Form einer Anzeigevorrichtung mit einem auf einem Display nachgebildeten Zeigerinstrument in einem abrativ bearbeiteten Gehäuse und
- Figur 5: eine Anzeigevorrichtung konventioneller Bauart.

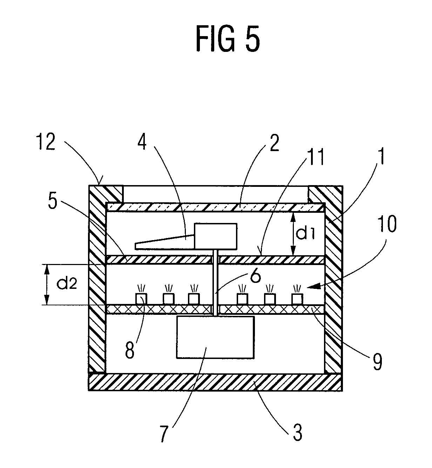

Zum besseren Verständnis der Erfindung wird die Erläuterung der Figur 5 hier vorangestellt. Figur 5 zeigt eine konventionell aufgebaute Anzeigevorrichtung mit einem Gehäuse 1, dessen frontseitiger Gehäuseteil 12 ein transparentes Deckglas 2 einfaßt. Das Gehäuse 1 ist rückseitig üblicherweise von einem Gehäusedeckel 3 abgeschlossen. Unter dem Deckglas 2 befindet sich im Inneren des Gehäuses 1 in einem in das Gehäuse 1 hinein versetzten Abstand d1 ein Skalenblatt 5 mit einer darauf abgebildeten Skale, wobei ein Zeiger 4 eines Zeigerinstruments zwecks Anzeige eines Meßwertes das Skalenblatt 5 überstreicht und die Skale üblicherweise auf dem Skalenblatt 5 aufgedruckt ist. Das Skalenblatt 5 bildet damit im wesentlichen die frontseitige Oberfläche 11 des Zeigerinstruments. Das Deckglas 2 ist hingegen aufgrund seiner Anordnung im Abstand d1 zum Skalenblatt 5 dem frontseitigen Gehäuseteil 12 der Anzeigevorrichtung zuzurechnen. Der Zeiger 4 ist im Regelfall starr an einer das Skalenblatt 5 durchstoßenden Achse 6 angebracht. Die Achse 6 wird ihrerseits zum Beispiel von einem Schrittmotor oder einem anderen geeigneten Antrieb 7 angetrieben. Das Zeigerinstrument besteht demnach im wesentlichen aus dem Zeiger 4, der Achse 6, dem Antrieb 7 und einer Skale. Die Skale und gegebenenfalls die Beschriftung auf dem Skalenblatt 5 werden für ihre bessere Ablesbarkeit bei unzureichenden Lichtverhältnissen zumeist beleuchtet. In diesem Beispiel ist eine Hinterleuchtung gezeigt, weshalb im Innern der Anzeigevorrichtung hinter dem Skalenblatt 5 Leuchtmittel 8 vorgesehen sind, die zum Beispiel aus Leuchtdioden bestehen und auf einer elektrischen Leiterplatte 9 aufgebracht sind. Dabei bildet der in der Figur 5 mit der Höhe d2 angegebene Bauraum einen Lichtkasten 10, der der Positionierung der Leuchtmittel 8 und der Kanalisierung des von ihnen erzeugten Lichtstroms dient. Alles in allem erfordert eine Anzeigevorrichtung konventioneller Bauart konstruktionsbedingt eine relativ große Bauhöhe.

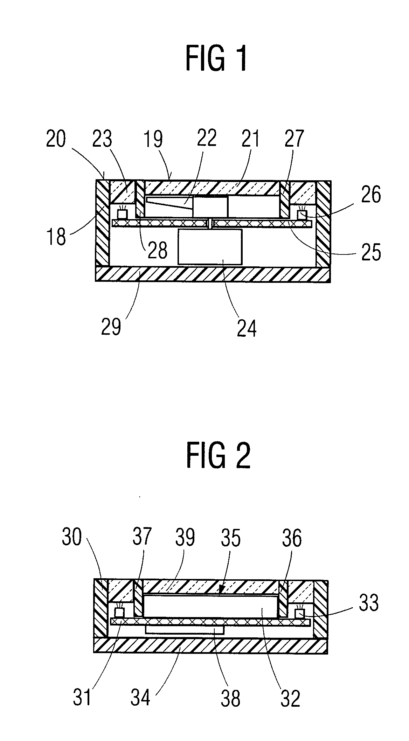

Die **Figur 1** zeigt nun ein Ausführungsbeispiel der Erfindung in Form einer Anzeigevorrichtung in einem aus Kunststoff in einem 2-Komponenten-Spritzgießverfahren hergestellten Gehäuse 18 mit einem diskret aufgebauten Zeigerinstrument. In diesem Beispiel ist zumindest die frontseitige Oberfläche 19 des Zeigerinstruments durchbruchfrei und zusammen mit dem frontseitigen Gehäuseteil 20 der Anzeigevorrichtung einstückig ausgebildet. Dabei besitzt der frontseitige Gehäuseteil 20 der Anzeigevorrichtung eine zumindest partiell transparente Abdeckung 21 für einen dahinter angeordneten auslenkbaren Zeiger 22. In Verbindung mit der frontseitigen Oberfläche 19 des Zeigerinstruments ist vorzugsweise ebenfalls im 2-Komponenten-Spritzgießverfahren eine Skale und gegebenenfalls eine Beschriftung 23 ausgebildet. Die Skale und gegebenenfalls ihre Beschriftung 23 befinden sich somit unmittelbar und ohne jeden Versatz mit der frontseitigen Oberfläche 19 des Zeigerinstruments in derselben Ebene, wobei die frontseitige Oberfläche 19 des Zeigerinstruments ihrerseits zusammen mit dem frontseitigen Gehäuseteil 20 der Anzeigevorrichtung einstückig ausgebildet ist. Im Herstellungsprozeß kann demnach der frontseitige Gehäuseteil 20 der Anzeigevorrichtung und die Abdeckung 21 sowie gegebenenfalls eine Skale und die Zeichen für ihre Beschriftung 23 in einem einzigen Spritzgießwerkzeug gefertigt werden, indem die Abdeckung 21 sowie gegebenenfalls die Skale und die Zeichen für ihre Beschriftung 23 von dem für das frontseitige Gehäuseteil 20 der Anzeigevorrichtung benötigten Werkstoff umspritzt werden. So wird man für die Abdeckung 21 vorzugsweise ein transparentes und für den Bereich der Skale und die Zeichen für ihre Beschriftung 23 zumindest ein lichtleitendes Kunststoffmaterial wählen, wohingegen für den frontseitigen Gehäuseteil 20 der Anzeigevorrichtung eher ein opaker Kunststoff verwendet wird. Der Zeiger 22 kann, wie in der Erläuterung zur Figur 5 ausgeführt, von einem zum Beispiel als Schrittmotor ausgebildeten Antrieb 24 angetrieben werden, wobei es möglich ist, den Antrieb 24 auf einer elektrischen Leiterplatte 25 anzubringen und den Zeiger 22 unmittelbar oberhalb der Leiterplatte 25, aber unmittelbar rückseitig der Abdeckung 21 rotieren zu lassen. Auch können wiederum Leuchtmittel 26 auf der Leiterplatte 25 montiert sein, die ihr Licht in Richtung der Skale und deren Beschriftung 23 abstrahlen. Es ist von Vorteil, innenseitig am frontseitigen Gehäuseteil 20 der Anzeigevorrichtung oder an der frontseitigen Oberfläche 19 des Zeigerinstruments Stege 27, 28 anzuformen, die den Lichtstrom der Leuchtmittel 26 kanalisieren und ein unerwünschtes Überblenden unterschiedlich ausgeleuchteter Bereiche vermeiden helfen. Im Regelfall wird das Gehäuse 18 der Anzeigevorrichtung mit einem Gehäusedeckel 29 rückseitig abgeschlossen, jedoch wäre als Rückwand unter Umständen auch die entsprechend ausgeformte Leiterplatte 25 verwendbar. Wesentlich an der gefundenen Lösung ist die einstückige, durchbruchfreie Ausgestaltung des frontseitigen Gehäuseteils 20 der Anzeigevorrichtung zumindest in Verbindung mit einer Abdeckung 21 für den Zeiger 22 sowie für den Bereich der Skale und deren Beschriftung 23.

Figur 2 stellt ein weiteres Ausführungsbeispiel der Erfindung dar. Auch hier besteht die Anzeigevorrichtung aus einem im 2-Komponenten-Spritzgießverfahren hergestellten Gehäuse 30, bei dem zumindest die frontseitige Oberfläche des Zeigerinstruments durchbruchfrei und zusammen mit dem frontseitigen Gehäuseteil der Anzeigevorrichtung derart einstückig ausgebildet ist, wie es zuvor in Verbindung mit der Figur 1 beschrieben wurde. Der Unterschied zur Figur 1 besteht nun darin, daß auf der Leiterplatte 31 zum Beispiel ein LC-Display 32 montiert ist, auf dessen Anzeigefeld 35 durch eine entsprechende elektronische Steuerschaltung 38 die Zeigerfunktion grafisch nachgebildet wird, wobei das Anzeigefeld 35 durch eine zumindest partiell transparente Abdeckung 39, die in der zuvor beschriebenen Weise in dem frontseitigen Gehäuseteil 30 der Anzeigevorrichtung formschlüssig ausgebildet ist, für einen Betrachter erkennbar ist. Die Anzeige ist damit ungehindert ablesbar. Auch in diesem Ausführungsbeispiel können wieder bedarfsweise Leuchtmittel 33, den Lichtstrom abschirmende Stege 36, 37 und ein das Gehäuse 30 abschließender Gehäusedeckel 34 vorgesehen sein.

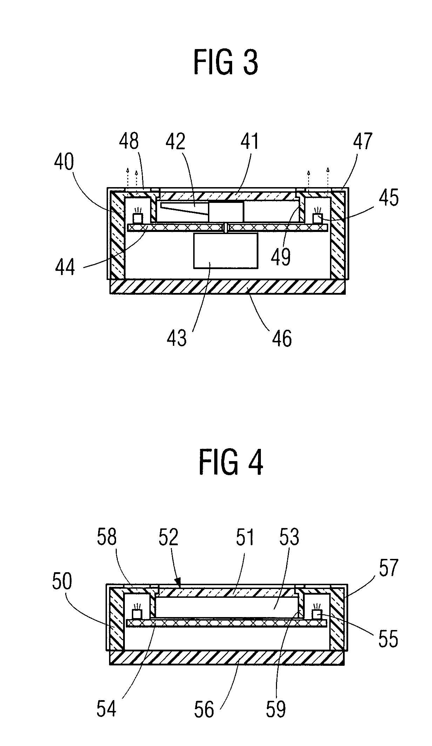

In den Ausgestaltungen der Anzeigevorrichtung gemäß den **Figuren 3 und 4** wird vorgeschlagen, zumindest den frontseitigen Gehäuseteil 40 bzw. 50 der Anzeigevorrichtung vollständig aus einem lichtdurchlässigen Kunststoff zu fertigen, wobei in diesen frontseitigen Gehäuseteil 40 bzw. 50 eine zumindest partiell transparente Abdeckung 41 bzw. 51 für einen dahinter angeordneten konventionellen Zeiger 42 oder für eine virtuell auf einem Anzeigefeld 52 eines Displays 53 erzeugte Zeigerfunktion formschlüssig eingearbeitet ist. Die übrigen Funktionselemente wie ein Schrittmotor 43 zum Antrieb eines konventionellen Zeigers 42, eine Leiterplatte 44 bzw. 54, eine elektronische Steuerschaltung 60 zur Ansteuerung des Displays 53, Leuchtmittel 45 bzw. 55 oder ein Gehäusedeckel 46 bzw. 56 können in der zuvor beschriebenen Weise vorhanden sein. Bei diesen Ausgestaltungen der vorgeschlagenen Anzeigevorrichtung gemäß den Figuren 3 und 4 wird der aus einem lichtdurchlässigen Kunststoff gefertigte frontseitige Gehäuseteil 40 bzw. 50 mit einer opaken Lackschicht 47 bzw. 57 überzogen, aus der die Skale und gegebenenfalls die Zeichen für deren Beschriftung 48 bzw. 58 beispielsweise mittels Laser abgetragen werden, so daß an diesen Stellen der lichtdurchlässige Kunststoff des frontseitigen Gehäuseteils 40 bzw. 50 von der abdeckenden Lackschicht 47 bzw. 57 freigelegt ist. Im eingeschalteten Zustand der im Inneren der Anzeigevorrichtung angeordneten Leuchtmittel 45 bzw. 55 erscheinen dann die Skale und die Zeichen für ihre Beschriftung 48 bzw. 58 beleuchtet, weil der aus einem lichtdurchlässigen Kunststoff gefertigte frontseitige Gehäuseteil 40 bzw. 50 als ein Lichtleiter wirkt. Dieser mittels Laser bearbeitete frontseitige Gehäuseteil 40 bzw. 50 ist in einfacher Weise mit unterschiedlichen Skalen und Beschriftungen versehbar, weil das Programm für die Steuerung eines Lasers leicht änderbar ist. Das Vorhalten vieler Varianten von bedruckten Skalenblättern entfällt.

In allen dargestellten Ausgestaltungen der gefundenen Lösung gemäß den Figuren 1 bis 4 können die Skale und ihre Beschriftung durch eine geeignete Wahl der Leuchtmittel 26, 33, 45 bzw. 55 auch farbig dargestellt werden, wobei durch die Ausbildung von Lichtschächten mittels der an der frontseitigen Oberfläche des Zeigerinstruments oder an dem frontseitigen Gehäuseteil angeformten Stege 27, 28, 36, 37, 49 bzw. 59 ohne weiteres auch verschiedenfarbig beleuchtete Bereiche oder Zeichen realisierbar sind.

In allen dargestellten Ausführungsbeispielen ist erkennbar, daß mit der gefundenen Lösung eine gattungsgemäße Anzeigevorrichtung in bisher unerreicht flacher Bauweise angefertigt werden kann, wobei Reflexe und störende Spiegelungen bei Lichteinfall durch den Wegfall eines von einem Skalenblatt beabstandet angeordneten Deckglases erst gar nicht auftreten können. Die vorgeschlagene Lösung macht gattungsgemäße Anzeigevorrichtungen auch kostengünstiger, weil ein gegebenenfalls aufwendig entspiegeltes Deckglas sowie ein bedrucktes Skalenblatt als Bauteil für die Anzeigevorrichtung entfallen. Die vorgeschlagene Anzeigevorrichtung zeigt zum Betrachter hin eine robuste, pflegeleichte, geschlossene Oberfläche, auf der die Anzeigefunktion unmittelbar und ohne jeden Versatz in der Bautiefe realisiert ist.

## Patentansprüche

1. Anzeigevorrichtung mit mindestens einem in deren frontseitigem Gehäuseteil (20) angeordneten Zeigerinstrument mit einer frontseitigen Oberfläche (19), **dadurch gekennzeichnet, daß** die frontseitige Oberfläche (19) des Zeigerinstruments durchbruchfrei und zusammen mit dem frontseitigen Gehäuseteil (20) der Anzeigevorrichtung einstückig ausgebildet ist.

2. Anzeigevorrichtung nach Anspruch 1, **dadurch gekennzeichnet, daß** die frontseitige Oberfläche (19) des Zeigerinstruments zusammen mit dem frontseitigen Gehäuseteil (20) der Anzeigevorrichtung einstückig aus Kunststoff in einem 2-Komponenten-Spritzgießverfahren hergestellt ist.

3. Anzeigevorrichtung nach einem der vorangegangen Ansprüche, **dadurch gekennzeichnet, daß** auf der frontseitigen Oberfläche (19) des Zeigerinstruments eine Skale und Zeichen für ihre Beschriftung (23) ausgebildet sind.

4. Anzeigevorrichtung nach einem der vorangegangen Ansprüche, **dadurch gekennzeichnet, daß** der frontseitige Gehäuseteil (20, 30) der Anzeigevorrichtung eine zumindest partiell transparente Abdeckung (21, 39) zum Erkennen eines dahinter angeordneten auslenkbaren Zeigers (22) oder eines Anzeigefeldes (35) aufweist, wobei auf dem Anzeigefeld (35) die Zeigerfunktion grafisch nachgebildet ist.

5. Anzeigevorrichtung nach einem der vorangegangen Ansprüche, **dadurch gekennzeichnet, daß** der frontseitige Gehäuseteil (40, 50) der Anzeigevorrichtung vollständig aus einem lichtdurchlässigen Kunststoff gefertigt ist, wobei in diesen frontseitigen Gehäuseteil (40, 50) eine zumindest partiell transparente Abdeckung (41, 51) zum Erkennen eines dahinter angeordneten auslenkbaren Zeigers (42) oder eines Anzeigefeldes (52) formschlüssig eingearbeitet ist, wobei auf dem Anzeigefeld (52) die Zeigerfunktion grafisch nachgebildet ist.

6. Anzeigevorrichtung nach einem der vorangegangen Ansprüche, **dadurch gekennzeichnet, daß** der frontseitige, vollständig aus einem lichtdurchlässigen Kunststoff gefertigte Gehäuseteil (40, 50) der Anzeigevorrichtung mit einer opaken Lackschicht (47, 57) überzogen ist, aus der die Bereiche für die Skale und die Zeichen für ihre Beschriftung (48, 58) abgetragen sind, so daß diese von der Lackschicht (47, 57) freigelegten Bereiche und Zeichen durch im Innern der Anzeigevorrichtung angeordnete Leuchtmittel (45, 55) beleuchtbar sind.

7. Anzeigevorrichtung nach einem der vorangegangen Ansprüche, **dadurch gekennzeichnet, daß** innenseitig am frontseitigen Gehäuseteil der Anzeigevorrichtung oder an der frontseitigen Oberfläche des Zeigerinstruments Stege (27, 28, 36, 37, 49, 59) angeformt sind, die den Lichtstrom von im Inneren der Anzeigevorrichtung angebrachten Leuchtmitteln (26, 33, 45, 55) kanalisieren.

8. Anzeigevorrichtung nach einem der vorangegangen Ansprüche, **dadurch gekennzeichnet, daß** die Leuchtmittel (26, 33, 45, 55) und der Antrieb (24, 43) für den Zeiger (22, 42) bzw. das Display (32, 52) auf derselben Leiterplatte (25, 31, 44, 54) montiert sind.

9. Anzeigevorrichtung nach einem der vorangegangen Ansprüche, **dadurch gekennzeichnet, daß** die Anzeigevorrichtung mit einem Gehäusedeckel (29, 34, 46, 56) oder durch die entsprechend ausgeformte Leiterplatte (25, 31, 44, 54) rückseitig abgeschlossen ist.

10. Anzeigevorrichtung nach einem der vorangegangen Ansprüche, **dadurch gekennzeichnet, daß** die Skale und die Zeichen für ihre Beschriftung verschiedenfarbig beleuchtet sind.
